# EUROPEAN PATENT APPLICATION

(11) **EP 1 182 147 A2**
(43) Date of publication of application: **27.02.2002**
(21) Application number: 01307054.5
(22) Date of filing: 20.08.2001
(51) Int. Cl.: B65D 81/38, B65D 25/16, B65D 25/18, B65D 41/32, B65D 41/34, A47J 41/00

(54) **Beverage container cap body**

(30) Priority: 25.08.2000 JP 2000255120; 25.08.2000 JP 2000255121; 25.08.2000 JP 2000255122
(71) Applicant: Nippon Sanso Corporation, Tokyo 105-0003 (JP)
(72) Inventor: Matsuyama, Shin, Tokyo 105-0003 (JP); Kowa, Yasuhiro, Tokyo 105-0003 (JP); Hatsumoto, Kunio, Tokyo 105-0003 (JP)
(74) Representative: Cummings, Sean Patrick

(57) **Abstract**

A beverage container cap body adapted to make it difficult to be easily unscrewed even though carbonated beverage is contained in a beverage container but make it easy to be smoothly opened even though there is a pressure from inside the beverage container, whereby packings are easily cleaned and the cap body can be equipped upright relative to the container, wherein the cap body comprises a cylindrical body, being releasably and threadably disposed to an inner circumferential wall of opening at a container body, and an upper area thereof protruding above the opening, a lower packing and an upper packing each tightly abutting on a lower side and an upper side of the inner circumferential wall of opening, a cut-out portion 9h formed at an upper wall of an insertion groove, of the lower packing and a lid body releasably and threadably disposed at an upper side of the cylindrical body, wherein an opening is formed at part of a ceiling wall of the lid body while a seal member is disposed at an inner side of the ceiling wall for covering an entire area of opening of the cylindrical body and concurrently blocking the opening of the ceiling wall.

## Description

### BACKGROUND OF THE INVENTION

### FIELD OF THE INVENTION

The present invention relates to a beverage container cap body, and more particularly to a beverage container cap body adapted to preserve even the carbonated beverage.

### DESCRIPTION OF THE PRIOR ART

Generally, a cap body installed at a metallic dual heat-insulating thermos bottle, which is a kind of beverage container, includes a cap made of synthetic resin and releasably threaded and disposed at an opening of container body, and an opening and closing member for opening and closing the opening.

This kind of beverage container is largely understood to interpose a packing for keeping watertightness in between an opening of container body and a lid body for opening and closing the opening, or between a cap member releasably and threadably disposed at the opening of the container body and a lid body for opening and closing the opening of the cap member.

Furthermore, in general, the cap body of beverage container releasably and threadably disposed at an inner circumferential wall of opening of the container body is equipped at a lower circumference thereof with a packing for closely abutting on a step portion of an inner circumferential lower area of opening at the container body in order to maintain a watertightness at the packing.

However, there is a problem in the beverage container cap body thus constructed according to the prior art in that, when carbonated beverage is put into and water-tightened in the beverage container, pressure in the container is raised, and is applied toward unscrewing direction of a cap body, resulting in fear of unscrewing the cap body threaded to an outer circumference wall of opening at the container body.

There is another problem in that, when a cap is opened in a container such as thermos bottle or the like disposed with a packing underneath an inner circumferential wall of the opening at the container body, the lower packing is deformed by internal pressure, making it difficult to detach the cap to release the internal pressure in a smooth way and resulting in spouting out the contents the moment the pressure is released, such that manufactures of thermos bottle recommend that users not keep carbonated beverage in the thermos bottle.

There is still another problem in that a packing is disposed at an inner side of ceiling wall of the cap body, making it difficult to take out the packing therefrom for a good cleaning when there is a need of cleaning the packing in the cap body of a frequently used beverage container.

There is still a further problem in that, in a beverage container disposed with a cap body at an inner circumferential wall of opening at a container body in a releasable and threadable way, there is a clearance or a gap between a threaded part formed at an inner circumferential wall of the opening at the container body and a threaded part formed at periphery of a cap body, such that, when the cap body is screwed up, a packing slantly touches relative to a step portion of the container body and a threaded part at the container and a threaded part at the cap body side go amiss at centerlines thereof such that an upper area of the cap body protruding from an upper side of the container body becomes inclined relative to the container body, making it difficult to stand same upright and presenting an awkward look. There is still a further problem in that there is a possibility of leakage of contents because packing does not uniformly contact an inner circumferential wall of opening at the container body.

### SUMMARY OF THE INVENTION

The present invention is disclosed to solve the aforementioned problems and it is an object of the present invention to provide a beverage container cap body adapted to make it difficult to be easily unscrewed even though carbonated beverage is contained in a beverage container but make it easier to release the internal pressure smoothly when opening even though there is a pressure from inside the beverage container.

It is another object of the present invention to provide a beverage container cap body adapted to make it easy for a packing to be cleaned.

It is still another object of the present invention to provide a beverage container cap body adapted to enable to be equipped upright relative to the container when the cap body is screwed to an opening of a container body.

In accordance with the objects of the present invention, there is provided a beverage container cap body, the cap body of beverage container releasably and threadably disposed to an inner circumferential wall of an opening at a container body, wherein a cap body of claim 1 is disposed with a lower packing tightly abutting on a lower inner circumferential wall of an opening at the container body and is formed with a cut-out part at an upper wall of an insertion groove at the lower packing,
wherein a cap body of claim 2 includes a hollow body for opening an container body side and is of a closed structure at upper surface thereof,
wherein a cap body of claim 3 includes a resilient seal member arranged to block the opening which formed at part of ceiling wall at an inner side of the ceiling wall and to simultaneously cover the opening,
wherein the cap body of claim 4 includes a lower packing for tightly abutting to a lower inner circumferential wall of opening at the container body, and a tongue-shaped upper packing tightly abutting on an upper inner circumferential wall of opening at the container body,
wherein the cap body includes a cylindrical body releasably and threadably disposed at an inner circumferential wall of opening at the container body for protruding an upper part above the opening of the container body, and a lid body releasably and threadably disposed at an upper portion of the cylindrical body for opening and closing opening of the cylindrical body.

### BRIEF DESCRIPTION OF THE DRAWINGS

For fuller understanding of the nature and objects of the invention, reference should be made to the following detailed description taken in conjunction with the accompanying drawings in which:
Figure 1 is an upper sectional view of a beverage container for illustrating a first embodiment of the present invention;
Figure 2 is an upper sectional view of a beverage container for illustrating a second embodiment of the present invention;
Figure 3 is a sectional view taken along line II - II of Figures 1 and 2;
Figure 4 is an upper sectional view of a beverage container for illustrating a third embodiment of the present invention;
Figure 5 is an upper sectional view of a beverage container for illustrating a fourth embodiment of the present invention; and
Figure 6 is an upper sectional view of a beverage container for illustrating a fifth embodiment of the present invention.

### DETAILED DESCRIPTION OF THE INVENTION

Preferred embodiments of the present invention will now be described in detail with reference the accompanying drawings.

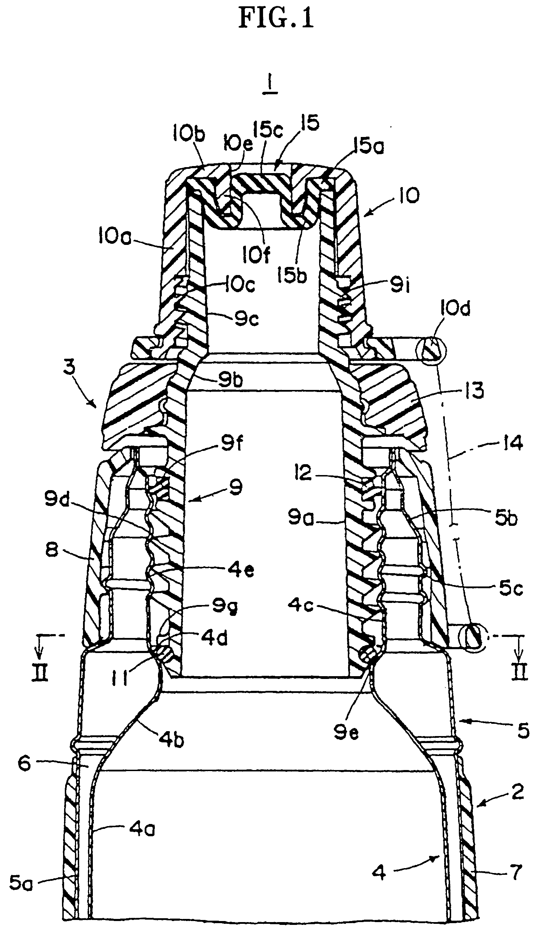

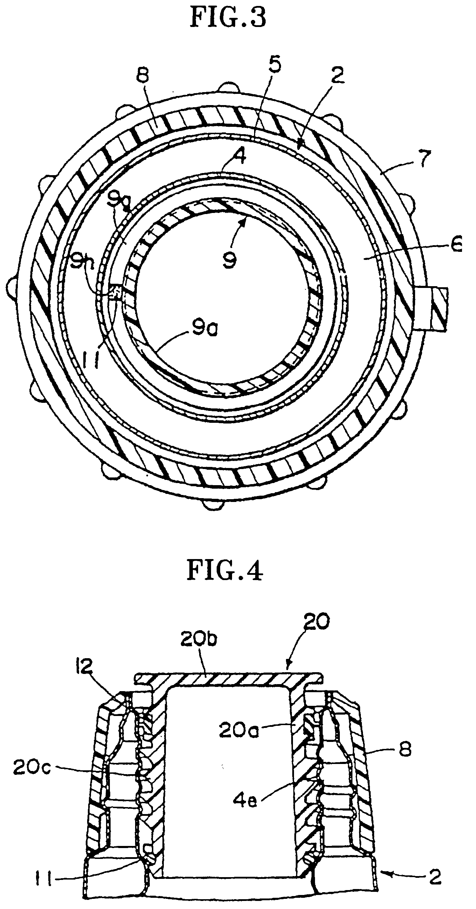

Figure 1 and 3 illustrated the first embodiment of the present invention, where the beverage container 1 includes a container body 2 of heat-insulating structure and a cap body 3 releasably disposed to an upper side of the container body 2. The container body 2 serves to integrally join upper ends of an inner metallic container 4 and an outer metallic containers 5 having an opening thereon, and also has an heat-insulating part 6 of vacuum heat-insulating structure between the two containers 4 and 5.

The inner container 4 is formed with a body 4a, a shoulder portion 4b that is continued from the body 4a with a narrowing diameter, a neck portion 4c that is continued from the shoulder portion 4b with a little bit larger diameter than that of an uppermost portion of the shoulder portion, a step portion 4d formed underneath the neck portion 4c and a threaded portion 4e formed at an inner circumferential wall of the neck portion 4c for being threaded to the cap body 3.

The outer container 5 includes a body 5a fitted with a grip ring 7 of synthetic resin at outside thereof, a neck portion 5b formed with a threaded portion 5c at an outer circumference wall thereof for screwing a neck member 8 of synthetic resin.

The cap body 3 is disposed with a cylindrical body 9 of synthetic resin detachably and threadably disposed at the threaded portion 4e of an inner circumferential wall of opening at the container body 2 for protruding at an upper section thereof above the opening at the container body 2, and a lid body 10 of synthetic resin detachably and threadably installed at an upper portion of the cylindrical body 9 for opening and closing the opening of the cylindrical body 9.

The cylindrical body 9 is composed of a body 9a screwed to the threaded portion 4e of the inner container 4, a shoulder portion 9b that is continued from an upper portion of the body 9a and is protruded above the opening of the container body 2, and a neck portion 9c that is continued to an upper portion of the shoulder portion 9b where diameter is narrowed at the neck portion 9c.

The body 9a is peripherally formed with a threaded portion 9d to be screwed to the threaded portion 4e at the inner container 4 while the threaded portion 9d is formed thereunder with an insertion groove 9e of lower packing 11 for closely abutting on an inner circumferential wall of the step portion 4d at the inner container 4 and is disposed thereon with another insertion groove 9f of upper packing 12 for closely abutting on an upper inner circumferential wall of the threaded portion 4e at the inner container 4. The insertion groove 9e of the lower packing 11 is formed at an upper wall 9g thereof with a cut-out portion 9h.

Furthermore, the shoulder portion 9b is fixedly installed at a periphery thereof with a grip member 13 for threadedly moving the cylindrical body 9. The neck portion 9c is peripherally disposed with a threaded portion 9i for screwing the lid body 10.

The lid body 10 is composed of a circumferential wall 10a and a ceiling wall 10b. The circumferential wall 10a is formed at an inner circumference wall thereof with a threaded portion 10c for screwing the threaded portion 9i of the cylindrical body 9.

The circumferential wall 10a is also disposed at a lower periphery thereof with a connection portion 10d for connecting with string-shaped connecting member 14, connecting member 14 being connecting with the neck member 8. The ceiling member 10b includes a circular opening 10e at a midsection thereof, and a cylindrical protruder 10f encompassing a lower circumference of the opening 10e. The ceiling wall 10b is equipped therein with a seal member 15 of flexible material, by way of example, resilient material, for covering an entire surface of the opening at the cylindrical body 9. The seal member 15 includes a peripheral wall 15a fitted into the ceiling wall 10b and an upper margin of opening at the cylindrical body 9, a bend portion 15b for insertion into the protruder 10f and a blocker 15c for insertion into the opening 10e at an inner side of the protruder 10f.

It should be noted however that, in preference to the sealing member 15, a ring-shaped seal member tightly abutting on an upper margin of the opening at the cylindrical body 9 and a resilient member having a hat shape at cross-sectional view thereof for insertion into the opening 10e may be used.

When the cylindrical body 9 is threaded to an inner circumferential wall of the opening at the container body 2 in the construction thus described, the upper packing 12 slides to contact the inner circumferential wall of the opening of the container body 2 to allow the lower packing 11 and the entire circumference of the upper packing 12 uniformly touch an inner circumferential wall of the opening, even though the lower packing 11 is tilted and threaded by the clearance between the threaded portion 4e of the inner container 4 and the threaded portion 9d of the body 9a at the cylindrical body, thereby enabling the center of the cylindrical body 9 to match the center of the opening. The cylindrical body 9 is therefore disposed to the container body 2 in upright state.

Furthermore, it should be apparent that the lower packing 11 of O-ring having a circular shape at cross-sectional view thereof, can maintain watertightness at the step portion 4d of the inner container 4.

It should be also noted that, in the present embodiment, the upper packing 12 can cope with eccentricity of the inner container 4 by way of its tongue 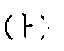 shape at cross-sectional view thereof.

Likewise, when the container body 2 threaded by the cylindrical body 9 is filled with carbonated beverage, and the lid body 10 is put on the cylindrical body 9, the cylindrical body 9 is diametrically expanded by the pressure in the container body 2 which rises in response to generation of carbonic acid gas in the carbonated beverage to thereby reinforce a theaded coupling between the threaded portion 9d and the threaded portion 4e of the inner container 4 and to simultaneously abut the lower and upper packings 11 and 12 on the inner circumferential wall at the neck portion 4c of the inner container 4. By this, the cap body 3 becomes a structure which can hardly be stripped of the container body 2.

In order to take off the tightly-contacted cap body 3, the grip member 13 is held to be rotated toward unscrewing direction of the cap body 3, whereby the cylindrical body 9 is moved upward and concurrently the lower packing 11 is moved outward by pressure to generate a gap at the insertion groove 9e and internal pressure of the container body 2 is released through the gap and the cut-out portion 9h to outside of the container body 2 through the cut-out portion 9h, thereby weakening the threaded coupling between the threaded portion 9d of the cylindrical body 9 and the threaded portion 4e of the inner container 4 and simultaneously weakening the tightness of the lower packing 11 to an easy stripping of the cap body 3.

Furthermore, slippage can be prevented by forming the grip ring 7 at outside of the body 5a and the grip member 13 for moving the cylindrical body 9 by way of screw motion with resilient member such as elastomer resin or the like, thereby enabling to easily and surely coupled or detach the cylindrical body 9 by way of screw motion.

Likewise, an upper portion of the cylindrical body 9 is made to protrude above the opening of the container body 2 to make a hollow space in the cylindrical body, such that, even though pressure is raised in the container body 2, buffer effect can be obtained for keeping the pressure in the hollow space.

When resilience of the blocker 15c at the seal member 15 of the lid body 10 is weakened, the blocker 15c of the seal member 15 is expanded outwardly from the opening 10e of the lid body 10 when the pressure in the container body 2 is raised, enabling to check pressure state within the container body 2 with the lid body 10 still disposed thereon.

Even when the pressure within the container body 2 is raised by hot beverage or the carbonated beverage in the container body 2, pressure within the container body 2 can be detected as well without opening the lid body 10.

When cleaning the seal member 15, the blocker 15c in the opening 10e of the lid body 10 opened from the cylindrical body 9 is pressed inwardly to thereby enable to take off the seal member 15 for being fully cleaned thereof.

Still furthermore, the blocker 15c can be made to stand out by changing colors of the blocker 15c at the seal member 15 in contrast with the ceiling wall 10b of the lid body 10. The lid 10 cannot be flung away while the lid body 10 can be easily opened even if there remains a small amount of pressure in the container body 2 when a space between a ring member rotatably coupled by being inserted into a lower side of the lid body 10 and the neck member 8 of the container body 2 is connected by a strip-shaped connecting member 14.

The connecting member 14 can be shortened by way of using resilient member for material thereof, such that the connecting member 14 will not be loosened any more and poses no hinderance.

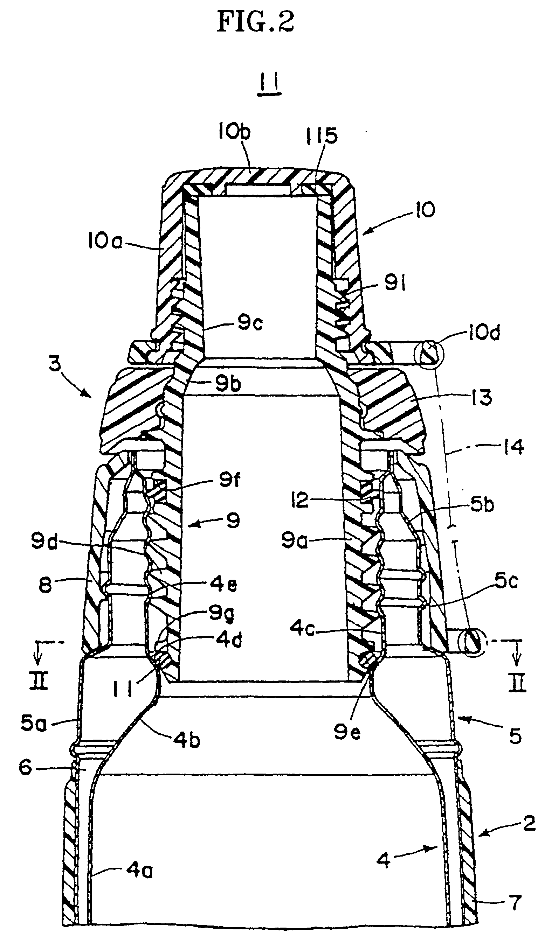

Figure 2 and 3 each illustrate a second embodiment of the present invention, where throughout the drawings like reference numerals are used for designation of like or equivalent parts or portions as in the first embodiment for simplicity of illustration and explanation.

A threaded portion 9d is formed thereunder with an insertion groove 9e of lower packing 11 of circular shape at cross-sectional view thereof for closely abutting on an inner circumferential wall of a step portion 4d at an inner container 4 and is disposed thereon with another insertion groove 9f of tongue-shaped upper packing 12 for closely abutting on an upper inner circumferential wall of a threaded portion 4e at the inner container 4. The insertion groove 9e of the lower packing 11 is formed at an upper wall thereof 9g with a cut-out portion 9h.

The lid body 10 includes a circumferential wall 10a and a ceiling wall 10b while the ceiling wall 10b is disposed therein with a ring-shape seal member 115 for closely abutting on a periphery of opening at a cylindrical body 9.

When the cylindrical body 9 is threaded to an inner circumferential wall of the opening at a container body 2 in the construction thus described, the upper packing 12 slides to contact the inner circumferential wall of the opening of the container body 2 to allow the lower packing 11 and the entire circumference of the upper packing 12 uniformly touch an inner circumferential wall of the opening, even though the lower packing 11 is titled and threaded by the clearance between the threaded portion 49 of the inner container 4 and the threaded portion 9d of the body 9a at the cylindrical body, thereby enabling the center of the cylindrical body 9 to match the center of the opening. The cylindrical body 9 is therefore disposed to the container body 2 in upright state.

Furthermore, it should be apparent that the lower packing 11 of O-ring having a circular shape at cross-sectional view thereof, can keep watertighthess at the step portion 4d of the inner container 4.

It should be also noted that, in the present embodiment, the upper packing 12 can cope with eccentricity of the inner container 4 by way of its tongue 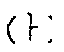 shape at cross-sectional view thereof.

Likewise, when the container body 2 threaded by the cylindrical body 9 is filled with carbonated beverage, and the lid body 10 is put on the cylindrical body 9, the cylindrical body 9 is diametrically expanded by the pressure in the container body 2 which rises in response to generation of carbonic acid gas in the carbonated beverage to thereby reinforce a theaded coupling between the threaded portion 9d and the threaded portion 4e of the inner container 4 and to simultaneously abut the lower and upper packings 11 and 12 on the inner circumferential wall at the neck portion 4c of the inner container 4. By this, a cap body 3 becomes a structure which can hardly be stripped of the container body 2.

In order to take off the tightly-contacted cap body 3, a grip member 13 is held to be rotated toward unscrewing direction of the cap body 3, whereby the cylindrical body 9 is moved upward and concurrently the lower packing 11 is moved outward by pressure to generate a gap at the insertion groove 9e and internal pressure of the container body 2 slips out from the gap to outside f the container body 2 through the cut-out portion 9h, thereby weakening the threaded coupling between the threaded portion 9d of the cylindrical body 9 and the threaded portion 4e of the inner container 4 and simultaneously weakening the tightness of the lower packing 11 to an easy stripping of the cap body 3.

Furthermore, slippage can be prevented by forming the grip ring 7 at outside of the body 5a and the grip member 13 for moving the cylindrical body 9 by way of screw motion with resilient member such as elastomer resin or the like, thereby enabling to easily and surely coupled or detach the cylindrical body 9 by way of screw motion.

Likewise, an upper portion of the cylindrical body 9 is made to protrude above the opening of the container body 2 to make a hollow space in the cylindrical body, such that, even though pressure is raised in the container body 2, buffer effect can be obtained for keeping the pressure in the hollow space.

Figure 4 illustrates a third embodiment of the present invention, where like reference numerals are used for designation of like or equivalent parts or portions as in the first embodiment for simplicity of illustration and explanation.

In Figure 4, a lid body 20 releasably and threadably disposed at a threaded portion 4e at an inner circumferential wall of opening at container body 2 is a blocker by way of ceiling plate 20 against an upper side of hollow body 20a for opening the container body 2, where, the hollow body 20a is formed at an outer periphery thereof with a threaded portion 20c for being screwed to the threaded portion 4e while the threaded portion 20c is coupled by a lower packing 11 and an upper packing 12 respectively.

In the construction thus described, the hollow body 20a is diametrically expanded by pressure in the container body 2 raised by carbonic acid gas generated from carbonated beverage in the container body 2 to reinforce threaded coupling between the threaded portion 20c and the threaded portion 4e of inner container 4, and simultaneously closely abut the lower packing 11 and the upper packing 12 to an inner circumferential wall at neck portion 4c of the inner container 4. By this, the lid body 20 is made to be difficult in being taken off from the container body 2. Furthermore, as the hollow body 20a of the lid body 20 is hollow, buffer effect can be obtained for keeping pressure to the hollow portion even though pressure rises in the container body 2.

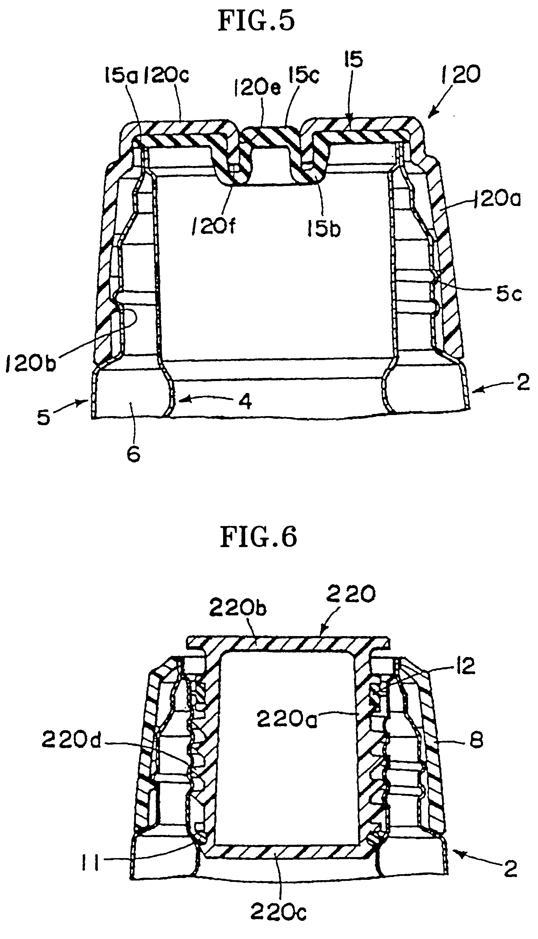

Figure 5 is a fourth embodiment of the present invention, where like reference numerals are used for designation of like or equivalent parts or portions as in the first embodiment for simplicity of illustration and explanation.

A cup-shaped lid body 120 is formed at an inner circumference of a circumferential wall 120a with a threaded portion 120b for being screwed to a threaded portion 5c of container body 2. A ceiling wall 120c includes a circular opening 120d at a central portion thereof and a cylindrical protruder 120e for encompassing a lower circumference the opening 120d. The ceiling wall 120c is equipped therein with a resilient seal member 15 for covering an entire surface of opening at the container body 2 as in the first embodiment.

Figure 6 is a fifth embodiment of the present invention where like reference numerals are designated for like or equivalent parts or portions as in the first embodiment.

A cap body 220 releasably and threadably disposed at a threaded portion 4e of an inner circumferential wall at opening of container body 2 is a ceiling plate 220b for blocking an upper side of hollow body 220a and a bottom plate 220c for blocking a lower side of the hollow body 220a. The hollow body 220a is formed at an outer periphery with a threaded portion 220d for being screwed to the threaded portion 4e. However it should be apparent that the threaded portion may be coupled thereunder by a lower packing 11 and may be coupled thereon by an upper packing 12.

In this construction, when the cap body 220 is threaded to an inner circumferential wall of opening at the container body 2, the upper packing 12 is made to slide to contact the inner circumferential wall of opening at the container body 2 by clearance between the threaded portion 4e of inner container 4 and the threaded portion 20d at the cap body 220 even though the lower packing 11 is tilted to be coupled by way of thread motion, to enable entire circumferences of the lower packing 11 and the upper packing 12 to uniformly contact the inner circumferential wall of the opening and the center of the cap body 220 to accord with the center of the opening, such that the cap body 220 can be disposed to the container body 2 at an upright position.

Furthermore, it should be noted that the shape of seal member may not be limited to that of each embodiment but may be of plate or hat shape at cross-sectional view thereof according to the shape of ceiling wall of lid body. Although the above embodiment has described carbonated beverage in the container body 2, the present invention is not limited thereto but can be applied to hot beverage having a rising pressure due to vibration applied thereof.

As apparent from the foregoing, there is an advantage in the beverage container cap body according to the first embodiment of the present invention thus described in that a cap body of beverage container threadedly and releasably disposed at an inner circumferential wall of opening at container body is equipped with a lower packing for tightly abutting on a lower portion of the inner circumferential wall of opening at the container body and a cut-out portion is formed at an upper wall of insertion groove at the lower packing, such that, when pressure rises in the container body, the lower packing is tightly abutted on the inner circumferential wall of the container body, making it difficult to remove the cap body even when carbonated beverage is filled therein, and when the cap body is to be taken off, the cap body is rotated to an unscrewing direction, whereby the lower packing is outwardly pressed and moved by pressure to generate a gap at the insertion groove and inner pressure of the container body is released outside of the container body from the gap through the cut-out portion, such that the lower packing is weakened at closeness thereof to allow the pressure to be smoothly released when the cap body is opened.

There is an advantage in the second embodiment of the present invention thus described in that an upper surface of hollow body at a cap body for opening a container body side is closed such that when pressure in the container body rises, a lower packing is made to tightly abut on an inner circumferential wall of opening at the container body and concurrently, the hollow body is diametrically expanded to reinforce a threaded coupling with the container body, thereby making it difficult to take off the cap body when carbonated beverage is filled therein and enabling to obtain a buffer effect for keeping a pressure in the hollow body even though pressure rises in the container body.

Furthermore, the cap body includes a cylindrical body detachably and threadably disposed at the inner circumferential wall of opening at the container body to enable to protrude above the opening of the container body and lid body releasably and threadably disposed at an upper surface of the cylindrical body for opening and closing an opening of the cylindrical body, such that when pressure in the container body rises, a cylindrical body is diametrically expanded to reinforce a threaded coupling between the container body and the lid body, making it difficult to unscrew the cap body even when carbonated beverage is filled in the container.

There is an advantage in the third embodiment of the present invention in that a cap body releasably and threadably disposed at an opening of container body is formed with an opening at a part of ceiling wall while a resilient seal member for block the opening of the ceiling wall and for covering an entire area of the opening is installed at an inner wall side of the ceiling wall, such that when seal member within opening of lid body is pressed from the outside, seal member can be taken off from the lid body and the seal member can be fully cleaned. Furthermore, when resilience of the seal member is made to be weakened, the seal member in the opening is expanded while pressure within the container body rises, to enable to check a pressure state within the container body.

There is an advantage in the fourth embodiment of the present invention in that a cap body releasably and threadably disposed at an inner circumferential wall of opening at container body includes a lower packing closely abutting on a lower side of inner circumferential wall of opening at the container body and an upper packing tightly abutting on an upper side of inner circumferential wall of opening at the container body, such that resistance to turning effect is small and detachment and attachment are readily available with less power when screws are coupled, where, the upper packing slides to contact the inner circumferential wall of opening at the container body by clearance between threaded portion of the container body and threaded portion of the cap body even if the lower packing is tilted to get threaded coupling when the cap body is threaded to couple to the inner circumferential wall of the container body, to thereby enable the entire circumference of the lower packing and the upper packing to uniformly touch the inner circumferential wall of the opening and the center of the cap body to accord with the center of the opening, whereby the cap body is disposed in upright position to the container body to improve appearance of the beverage container.

## Claims

1. A beverage container cap body, the cap body releasably and threadably disposed to an inner circumferential wall of opening at a container body, wherein the cap body is disposed with a lower packing tightly abutting on a lower inner circumferential wall of opening at the container body and is formed with a cut-out part at an upper wall of an insertion groove for the lower packing.

2. A beverage container cap body, the cap body releasably and threadably disposed to an inner circumferential wall of opening at a container body, wherein the cap body comprises a hollow body for opening a container body side and is of a closed structure at upper surface thereof.

3. A beverage container cap body, the cap body releasably and threadably disposed to an inner circumferential wall of opening at a container body, wherein the cap body comprises a resilient seal member arranged to block the opening at part of ceiling wall at an inner side of the ceiling wall and to simultaneously cover the opening.

4. A beverage container cap body, the cap body releasably and threadably disposed to an inner circumferential wall of opening at a container body, wherein the cap body comprises:
a lower packing for tightly abutting to a lower inner circumferential wall of opening at the container body; and
a tongue-shaped upper packing tightly abutting to an upper inner circumferential wall of opening at the container body.

5. A beverage container cap body as defined in one of claim 1 to claim 4, wherein the cap body comprises:
a cylindrical body releasably and threadably disposed at an inner circumferential wall of opening at the container body for protruding an upper part thereof above the opening of the container body; and
a lid body releasably and threadably disposed at an upper portion of the cylindrical body for opening and closing opening of the cylindrical body.
